## Europäisches Patentamt

## European Patent Office

## Office européen des brevets

(19)

(11) Veröffentlichungsnummer: **0 113 797**
**B1**

(12) ## EUROPÄISCHE PATENTSCHRIFT

(45) Veröffentlichungstag der Patentschrift:
**10.12.86**

(21) Anmeldenummer: **83107187.3**

(22) Anmeldetag: **22.07.83**

(51) Int. Cl.⁴: **C 08 G 63/66,** C 08 G 63/48,
C 08 G 63/42, C 09 D 3/64,
C 08 G 63/20

(54) **Alkydharze, enthaltend Ringöffnungsprodukte epoxidierter Fettalkohole oder Fettsäurederivate als Hydroxylverbindungen.**

(30) Priorität: **16.12.82 DE 3246618**

(43) Veröffentlichungstag der Anmeldung:
**25.07.84 Patentblatt 84/30**

(45) Bekanntmachung des Hinweises auf die Patenterteilung:
**10.12.86 Patentblatt 86/50**

(84) Benannte Vertragsstaaten:
**AT CH DE GB LI**

(56) Entgegenhaltungen:
**US - A - 3 827 993**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Wilk, Hans-Christoph, Dr., An der Obererft 94, D-4040 Neuss (DE)**
Erfinder: **Meffert, Alfred, Dr., Marie-Curie-Strasse 10, D-4019 Monheim (DE)**
Erfinder: **Fischer, Herbert, Dr., Am Nettchesfeld 14, D-4000 Düsseldorf 13 (DE)**
Erfinder: **Wegemund, Bernd, Dr., Händelweg 3, D-5657 Hann (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem Gebiet der Alkydharze. Sie schlägt neue Harze zur Verwendung in Wasserlacken speziell ofentrocknenden Wasserlacken vor, die als kennzeichnenden Bestandteil mehrfunktionelle Hydroxylverbindungen enthalten, welche aus Epoxiden von Fettsäurederivaten oder aber aus Epoxiden von Fettsäurederivaten oder aber aus Epoxiden von Fettalkoholen hergestellt sind.

Alkydharze sind Polyester aus Ölen oder Fettsäuren, mehrfunktionellen Carbonsäuren und mehrfunktionellen Hydroxyverbindungen. Wenngleich zur Herstellung von Alkydharzen zahlreiche Verbindungen eingesetzt werden können, so ist doch aus wirtschaftlichen Überlegungen die Anzahl der tatsächlich eingesetzten Verbindungen eng begrenzt. Um den gestiegenen technischen Anforderungen auf Spezialgebieten gerecht zu werden, besteht somit der Bedarf nach neuen Harzen auf Basis neuer technisch zugänglicher Rohstoffe. Dies gilt insbesondere für das Gebiet der in ofentrocknenden Wasserlacken verwendbaren Alkydharze. Aufgrund der Verknappung und Verteuerung petrochemischer Rohstoffe sind Produkte auf natürlicher, oleochemischer Basis von besonderem Interesse.

Als oleochemische Rohstoffe werden in dem US-Patent 3827933 Polyole mit geringer Säurezahl (in den Beispielen nicht über 5) beschrieben. Die zugrunde liegenden oleochemischen Produkte sind Umsetzungsprodukte epoxidierter Triglyceride oder epoxidierter Ester gesättigter Verbindungen mit mehrfunktionellen Hydroxidverbindungen. Die dort genannten Polyole eignen sich zur Herstellung von harten Polyurethanschäumen. Hinweise auf die Verbesserung der Eigenschaften von Wasserlacken sind dem US-Patent nicht zu entnehmen.

In den letzten Jahren gab es zahlreiche Bemühungen, ofentrocknende Lacke zu schaffen, die beim Einbrennen möglichst wenig flüchtige, die Atmosphäre verunreinigende Substanzen abgeben. So wurde zum Beispiel vielfach vorgeschlagen, carboxylgruppenhaltige Alkydharze als Bindemittel zu verwenden, welche nach Neutralisation mit Aminen in wässrigen Lösungsmittelgemischen gelöst werden können. Hierfür geeignete Alkydharze weisen meist Säurezahlen zwischen 40 und 80 auf. Bekannt ist weiterhin die Verwendung von Alkydharzdispersionen, welche Säurezahlen <30 mg oder auch <10 aufweisen, aber Emulgiermittel enthalten.

Bekannt sind schliesslich Alkydharzmikroemulsionen, welche Säurezahlen zwischen 5 und 35 haben, jedoch keine flüchtigen Lösungsmittel und nur solche Emulgatoren enthalten, die beim Einbrennen ihre Hydrophilie verlieren. So werden in der US-Patentschrift 4271051 Alkydharze vorgeschlagen, welche durch Umsetzung freier Carboxylgruppen mit Glycid zahlreiche 2,3-Dihydroxypropylgruppen enthalten. Durch Auswahl geeigneter Amine, Emulgatoren und Vernetzungsmittel – meist Melaminharze – lassen sich aus den genannten Alkydharzen optisch klare wässrige Zubereitungen (Mikroemulsionen) herstellen, welche beim Einbrennen praktisch keine schädlichen Bestandteile an die Atmosphäre abgeben.

Wenngleich diese Alkydharze hinsichtlich der Verarbeitbarkeit zu Wasserlacken und aus Umweltüberlegungen weitestgehend den Anforderungen entsprechen, so bestand doch ein Bedürfnis, die technischen Eigenschaften von daraus herstellbaren Lackfilmen zu verbessern. So sollte unter Beibehaltung der übrigen günstigen Eigenschaften die Wasserfestigkeit – zu ermitteln im Schwitzkastentest – sowie die Flexibilität der Lackfilme bei grosser Härte erhöht werden.

Zur Erhöhung der Flexibilität von Alkydharzlacken ist es aus der US-PS 4039495 bekannt, Trimethylolnitromethan als Additiv zu verwenden. Dieses sehr hydrophile Additiv vermindert jedoch die Wasserbeständigkeit der Lackfilme erheblich. Auch Versuche durch Erhöhung des Fettsäureanteils in den Alkydharzen zu flexiblen Lacken zu gelangen, führten nicht zum Ziel, da derartige Harze nicht lösungsmittelfrei zu Wasserlacken konfektionierbar waren.

Aufgabe der Erfindung ist es somit, verbesserte Alkydharze für Wasserlacke bereitzustellen, die als Hydroxyverbindungen Umsetzungsprodukte epoxidierter Fettsäurederivate oder Fettalkohole enthalten und die sich zu Lacken mit erhöhter Flexibilität bei hoher Härte und erhöhter Schwitzwasserbeständigkeit verarbeiten lassen. Weiterhin ist es Aufgabe der Erfindung, die zu umweltfreundlichen Lacksystemen konfektionierbaren Alkydharze, die aus der US-Patentschrift 4271051 bekannt sind, hinsichtlich Flexibilität bei hoher Härte und Schwitzwasserbeständigkeit zu verbessern.

Die Lösung der Aufgabe gelang durch zumindest teilweisen Ersatz von üblicherweise in Alkydharzen verwendeten Hydroxyverbindungen durch die Umsetzungsprodukte epoxidierter Fettsäurederivate oder epoxidierter Fettalkohole, wobei diese Rohstoffe in einem vorgeschalteten getrennten Herstellungsschritt erzeugt worden waren.

Gegenstand der Erfindung sind somit Alkydharze, hergestellt aus mehrwertigen Carbonsäuren beziehungsweise ihren reaktiven Derivaten und mehrwertigen Alkoholen, gewünschtenfalls unter Mitverwendung einwertiger Modifizierungsmittel, bei denen als mehrwertige Alkohole wenigstens anteilsweise Umsetzungsprodukte von epoxidierten Fettsäureestern und/oder -amiden und/oder epoxidierten Fettalkoholen mit Alkoholen und/oder Phenolen enthalten sind, welche gewünschtenfalls zumindest anteilsweise mit Alkenoxiden mit bis zu 4 Kohlenstoffatomen zur Reaktion gebracht worden sind und die dadurch gekennzeichnet sind, dass die Alkydharze eine Säurezahl zwischen 15 und 30 sowie eine OH-Zahl grösser 100 oder eine Säurezahl zwischen 25 und 80 und eine OH-Zahl kleiner 100 aufweisen.

In ihrer allgemeinsten Form betrifft die Erfindung somit Alkydharze im genannten Kennzahlenbereich mit unterschiedlicher Zusammensetzung, die die genannten Rohstoffe enthalten. Die Umsetzungsprodukte epoxidierter Fettsäurederivate oder Fettalkohole werden dazu in Mengen von 5 bis 60 zu Gew.-% , bezogen auf Alkydharz, eingesetzt. Um im Einzelfall die exakte Menge zu berechnen, geht man vorzugsweise von einer Alkydharzrezeptur aus und ersetzt die darin vorhandenen Hydroxylgruppen tragenden Verbindungen zumindest teilweise durch die Umsetzungsprodukte. In vielen Fällen ist es günstig, die Anzahl an mol Hydroxylgruppen dabei konstant zu halten. Es kann jedoch auch günstig sein, bei der Modifizierung mehr Hydroxylgruppen einzuführen, d.h. die Modifizierungsmittel im molaren Überschuss, bezogen auf die ersetzte Komponente einzusetzen.

Nach einer ersten Ausführungsform betrifft die Erfindung Alkydharze, die Umsetzungsprodukte epoxidierter Triglyceride mit Hydroxyverbindungen enthalten. Derartige Umsetzungsprodukte lassen sich am besten durch ihre Herstellungsweise charakterisieren. Die Herstellung der Umsetzungsprodukte ist jedoch nicht Gegenstand der Erfindung. Epoxidierte Triglyceride lassen sich auf Basis Doppelbindungen enthaltender Öle herstellen. Geeignete Öle sind Sonnenblumenöl, Sojaöl, Holzöl, Leinöl und andere mehr. Die Epoxidation dieser Öle kann so geführt werden, dass nur wenige oder praktisch alle Doppelbindungen in Epoxidringe überführt werden. Die Ringöffnung der Epoxide mit den Hydroxyverbindungen erfolgt katalytisch und wird so durchgeführt, dass praktisch keine Epoxidgruppen mehr nachzuweisen sind. Teilweise ringgeöffnete epoxidierte Triglyceride sind zwar technisch zugänglich, jedoch nicht Umsetzungsprodukte im Sinne der Erfindung.

Die Umsetzungsprodukte epoxidierter Triglyceride lassen sich nach der Funktionalität der verwendeten Hydroxyverbindung einteilen. Umsetzungsprodukte mit primären Alkoholen haben ausschliesslich sekundäre OH-Gruppen. Zur Ringöffnung geeignete monofunktionelle Hydroxyverbindungen sind Alkohole wie Methanol, Ethanol, Propanol und deren höhere Homologe, insbesondere Fettalkoholschnitte, Alkohole mit verzweigter C-Kette oder cyclische Alkohole sowie Phenole. Bevorzugt sind für Alkydharze, welche in ofentrocknenden Systemen verwendet werden, Methanol und Ethanol sowie Phenol. Für lufttrocknende Alkydharze sind ungesättigte Alkohole wie z.B. Allylalkohol sowie Fettalkoholgemische mit Iodzahl 60–170 bevorzugt.

Die Umsetzungsprodukte der epoxidierten Triglyceride mit Dihydroxyverbindungen zeigen unterschiedlichen chemischen Aufbau je nach Molverhältnis der eingesetzten Reaktanten. Werden die Dihydroxyverbindungen in einer Menge von einem oder weniger mol pro mol Epoxidgruppen eingesetzt, so entstehen harzartige Verbindungen, die mehr sekundäre als primäre Hydroxylgruppen haben. Werden die Dihydroxyverbindungen im grossen Überschuss, etwa 4 mol pro mol Epoxidgruppe oder 10 mol pro mol Epoxidgruppe, eingesetzt, so entstehen Verbindungen, die im Extremfall eine gleiche Anzahl primärer und sekundärer OH-Gruppen aufweisen. Beide Arten von Umsetzungsprodukten sowie ihre Mischungen und Übergangstypen sind im Sinne der Erfindung geeignete Alkydharzrohstoffe. Geeignete Dihydroxyverbindungen zur Ringöffnung der epoxidierten Triglyceride sind z.B. Glykole wie Ethylenglykol oder Propylenglykol deren Kondensationsprodukte, Propandiol, Butandiol, Neopentylglykol, Hexandiol, Bisphenol-A oder andere in Alkydharzen üblicherweise verwendete Dihydroxyverbindungen.

Im Sinne der Erfindung geeignete Umsetzungsprodukte epoxidierter Triglyceride können weiterhin durch Ringöffnung mit Trihydroxyverbindungen oder noch höher funktionellen Hydroxyverbindungen hergestellt werden. Geeignet sind hier in erster Linie Glycerin, Trimethylolethan, Trimethylolpropan, Pentaerythrit, Sorbit sowie die durch Selbstkondensation von Glycerin unter Wasserabspaltung herstellbaren Polyole. Weiterhin geeignet sind Umsetzungsprodukte dieser Hydroxyverbindungen mit Ethylenoxid und/oder Propylenoxid. Bevorzugte Rohstoffe für Alkydharze, die zu Wasserlacken verarbeitet werden sollen, sind die Umsetzungsprodukte von epoxidiertem Sojaöl mit einem hohen Überschuss an Ethylenglykol oder Glycerin.

In einer weiteren Ausführungsform betrifft die Erfindung Alkydharze, welche Umsetzungsprodukte epoxidierter Fettsäureester primärer Alkohole enthalten. Auch diese Umsetzungsprodukte lassen sich am besten durch ihre Herstellung charakterisieren, wenngleich diese nicht Gegenstand der Erfindung ist. Geeignete Ausgangsstoffe zur Herstellung dieser Umsetzungsprodukte sind die Epoxide von Estern aus hochiodzahligen Fettsäureschnitten und primären Alkoholen, vorzugsweise Methanol und Ethanol. So ist zum Beispiel der epoxidierte Methylester eines aus Sojaöl gewonnenen ölsäurereichen Fettsäureschnittes ein geeignetes Ausgangsmaterial. In Analogie zu den epoxidierten Triglyceriden kann die Umsetzung mit mono- oder mit mehrfunktionellen Hydroxyverbindungen geführt werden. Wenngleich auch bei der Umsetzung mit monofunktionellen Hydroxyverbindungen geeignete Alkydharzrohstoffe entstehen, so ist doch die Umsetzung mit mehrfunktionellen Hydroxyverbindungen, insbesondere mit den vorgenannten, bevorzugt. Wenngleich unter schonenden Bedingungen die Öffnung des Epoxidrings ohne Reaktion an der Estergruppe möglich ist, so ist es doch bevorzugt, gleichzeitig umzuestern. Die Hydroxyverbindungen können hierbei ebenfalls in molaren Mengen oder aber im Überschuss eingesetzt werden. Häufig verwendete Molverhältnisse (Ester:Hydroxyverbindung) sind 1:1, 1:2, 1:3, 1:4 und 1:10. Besonders geeignete Alkydharzrohstoffe entstehen durch Umsetzung von epoxidierter Fettsäureester mit Dihydroxyverbindungen oder Trihydroxyverbindungen unter Ringöffnung und Umesterung.

In einer bevorzugten Ausführungsform betrifft die Erfindung Alkydharze, welche Umsetzungsprodukte epoxidierter Fettalkohole enthalten. Fettalkohole sind Gemische primärer, unverzweigter, monofunktioneller Alkohole, die in ihrer chemischen Zusammensetzung, also Anzahl und Lage von Doppelbindungen, den Fettsäureschnitten entsprechen, aus denen sie unter Erhalt von Doppelbindungen hergestellt werden können. Fettalkohole können nach bekannten Verfahren epoxidiert werden und mit Hydroxyverbindungen zu den erfindungsgemässen Umsetzungsprodukten weiter verarbeitet werden. Die Herstellung der erfindungsgemäss definierten Umsetzungsprodukte epoxidierter Fettalkohole mit Hydroxyverbindungen ist Gegenstand der älteren Deutschen Patentanmeldung DE-A-3246611 (eingereicht am gleichen Tag).

Die Beschreibung geeigneter Umsetzungsprodukte von epoxidierten Fettalkoholen ist am besten über ihre Ausgangsstoffe möglich. So sind im Sinne der Erfindung Diole geeignet, welche durch Ringöffnung epoxidierter Fettalkohole mit hoher Epoxidzahl durch monofunktionelle Alkohole hergestellt worden sind. Als monofunktionelle Alkohole sind Methanol und Ethanol bevorzugt. Geeignet sind jedoch auch deren höhere Homologen, insbesondere gesättigte Fettalkohole, die bereits im Gemisch mit den epoxidierten Fettalkoholen vorliegen. Weiterhin können ungesättigte Alkohole oder Phenole verwendet werden. In lufttrocknenden Systemen sind Alkohole mit einer oder mehreren Doppelbindungen bevorzugt.

Im Sinne der Erfindung bevorzugte Umsetzungsprodukte epoxidierter Fettalkohole sind solche mit mehrfunktionellen Hydroxyverbindungen, und zwar sowohl die Umsetzungsprodukte im Molverhältnis von etwa 1:1 wie auch die Umsetzungsprodukte mit einem grossen Überschuss, etwa einem 4 bis 10 molaren Überschuss, an mehrfunktioneller Hydroxyverbindung. Geeignete mehrfunktionelle Hydroxyverbindungen zur Umsetzung mit epoxidierten Fettalkoholen sind vorstehend bei den Umsetzungsprodukten epoxidierter Triglyceride bereits beschrieben.

Im Sinne der Erfindung besonders bevorzugte Umsetzungsprodukte erhält man, wenn man von oleylalkoholreichen Fettalkoholgemischen ausgeht, diese epoxidiert und dann mit Triolen oder Diolen umsetzt. Besonders bevorzugt sind die Umsetzungsprodukte mit Ethylenglykol, Glycerin und Trimethylolpropan.

Nach einer weiteren, besonders bevorzugten Ausführungsform werden epoxidierte Fettalkohole, die reich an epoxidiertem Erucaalkohol sind, verwendet und mit den vorgenannten Diolen und Triolen umgesetzt.

Nach einer weiteren Ausführungsform der Erfindung werden Alkydharze hergestellt, die solche Umsetzungsprodukte von epoxidierten Fettalkoholen enthalten, welche ihrerseits wiederum mit 3 bis 30 mol Ethylenoxid oder Propylenoxid umgesetzt worden sind. Es ist besonders bevorzugt, mit bis zu 5 mol Propylenoxid umzusetzen. Für hydrophilere Harze, etwa für die Verwendung in Wasserlacken, sind Umsetzungsprodukte mit bis zu 10 mol Ethylenoxid günstig.

Nach einer weiteren Ausführungsform der Erfindung werden Umsetzungsprodukte epoxidierter Fettsäureamide eingesetzt. Besonders bevorzugt sind hier Ringöffnungsprodukte von Diethanolamiden ungesättigter Fettsäuren mit primären Alkoholen, Dihydroxy, Trihydroxy oder noch höher funktionellen Hydroxyverbindungen.

Unter Verwendung der erfindungsgemäss definierten Umsetzungsprodukte epoxidierter Fettsäurederivate oder epoxidierter Fettalkohole können unterschiedlichste Alkydharze aufgebaut werden. So können Harze mit hohem oder niederem Fettsäuregehalt (langölige bzw. kurzölige) sowie fettsäurefreie Alkydharze hergestellt werden. Weiterhin ist die Erzeugung von Alkydharzen mit niedrigem (etwa 2000) bzw. mit hohem (etwa 10000) Molekulargewicht möglich. Dabei werden Alkydharze mit zahlreichen Carboxylgruppen zur Verwendung in Wasserlacken hergestellt.

Alkydharze mit einem Fettsäureanteil grösser 40 Gew.-% und sehr geringer Säurezahl ergeben meist ausreichend flexible und ausreichend wasserfeste Überzüge, so dass hier der erfindungsgemässe Vorteil hauptsächlich in der Verwendung eines Rohstoffes auf vorwiegend natürlicher Basis liegt.

Erfindungsgemässe Harze werden vorzugsweise hergestellt, indem die Umsetzungsprodukte epoxidierter Fettsäureester, Fettsäureamide oder Fettalkohole mit weiteren Hydroxyverbindungen, wie Glycerin, Trimethylolpropan, Neopentylglykol, Ethylenglykol, Pentaerythrit oder Sorbit mit Fettsäuren und mehrfunktionellen Carbonsäuren oder deren reaktiven Derivaten zur Reaktion gebracht werden. Geeignete mehrfunktionelle Carbonsäuren sind beispielsweise Phthalsäure und/oder deren Isomere, Trimellitsäure, Adipinsäure, Sebacinsäure, Maleinsäure oder Fumarsäure. Die Kondensation findet nach bekannten Verfahren statt. Dabei werden Temperaturen von 150–250 °C angewendet. Saure Katalysatoren wie z.B. p-Toluolsulfonsäuren können zugefügt werden. Der Reaktionsverlauf lässt sich durch die Menge an abgeschiedenem Reaktionswasser sowie durch Messung der Säurezahl verfolgen.

Weitere erfindungsgemässe Alkydharze sind Harze mit bis zu 40 Gew.-% Fettsäuren, die bis zu einer Säurezahl zwischen 25 und 80 kondensiert werden und eine OH-Zahl <100 mg KOH/g aufweisen. Diese eignen sich zur Verwendung in Wasserlacken. Aufgrund ihrer hohen Funktionalität haben die Harze meist ein geringeres Molekulargewicht, üblicherweise zwischen 200 und 10000. Zur Herstellung der Wasserlacke aus den Harzen werden diese mit Basen neutralisiert und meist in Gegenwart von Hilfsstoffen in Wasser gelöst. Eine detaillierte Abhandlung über Wasserlacke findet sich in dem Buch Waterborne Coatings von Charles R. Martens, erschienen bei Van Nostrand Reinhold Co., New York 1981.

Erfindungsgemässe Alkydharze zur Verwendung in lufttrocknenden Wasserlacken weisen einen hohen Gehalt an ungesättigten Verbindungen auf, jedoch nur sehr wenig Hydroxylgruppen. Ofentrocknende erfindungsgemässe Alkydharze haben hingegen eine OH-Zahl >50 mg KOH/g, um durch Reaktion mit z.B. Melaminharzen beim Einbrennen gehärtet werden zu können. Unter Verwendung der Umsetzungsprodukte epoxidierter Fettsäureester, -amide oder Fettalkohole werden Harze für Wasserlacke erhalten, die zu besonders schwitzwasserfesten Überzügen, die gleichzeitig hart und flexibel eingestellt werden können, verarbeitbar sind.

Eine besonders bevorzugte Art erfindungsgemässer Alkydharze weist eine Säurezahl zwischen 15 und 30 und insbesondere zwischen 20 und 25 auf, sowie eine OH-Zahl >100, vorzugsweise >200. Zur Herstellung dieser Harze wandelt man ein Harz nach der Lehre der Deutschen Patentschrift 2842919 durch molmässigen Austausch einer Dihydroxy- oder Trihydroxyverbindung gegen die erfindungsgemässen Umsetzungsprodukte ab. Hierzu werden 5–60 Gew.-%, bezogen auf Gesamtharz, vorzugsweise jedoch nur 5 bis 25 Gew.-%, bezogen auf Gesamtharz, Umsetzungsprodukte epoxidierter Fettsäureester, -amide oder Fettalkohole zusammen mit gegebenenfalls weiteren Hydroxyverbindungen, Fettsäuren, Dicarbonsäuren wie Adipinsäure oder Phthalsäure, Tricarbonsäuren wie Trimellitsäure unter wasserabspaltenden Bedingungen kondensiert, bis ein Harz mit einer Säurezahl zwischen 30 und 180, vorzugsweise 60–100, entstanden ist. Sodann wird durch Zugabe von Glycid verestert, bis eine Säurezahl zwischen 5 und 35 mg KOH/g erreicht ist. Die so hergestellten Alkydharze lassen sich in Gegenwart von Neutralisationsmitteln und Emulgatoren, welche beim Einbrennen ihre Hydrophilie zumindest teilweise verlieren, zu lösungsmittelfreien, für das Auge klaren wässrigen Alkydharzzubereitungen (Mikroemulsionen) konfektionieren.

Derartige Harze lassen sich zu Wasserlacken verarbeiten, welche nach dem Einbrennen – auch pigmentiert – hochglänzende Filme ergeben (75–98% Reflexion bei einem Winkel von 20°). Ersetzte man in den erfindungsgemässen Harzen die Ringöffnungsprodukte epoxidierter Fettsäurederivate oder Fettalkohole durch »Oxoalkohole« (Formylierungsprodukte von z.B. Oleylalkohol) wie z.B. 9-(Hydroxymethyl)-octadecanol oder 9,10-Di-(hydroxymethyl)-octandecanol, so wurden nur 40–50% Reflexion bei einem Winkel von 20° bei Weisslacken gemessen.

In einer weiteren Ausführungsform betrifft die Erfindung sogenannte ölfreie Alkydharze. Unter ölfreien Alkydharzen seien Alkydharze verstanden, die keine Fettsäuren enthalten, dafür aber die Umsetzungsprodukte von langkettigen Epoxiden. Derartige Alkydharze sind herstellbar durch Kondensation von monofunktionellen Olefinoxiden mit endständigem oder innenständigem Epoxidring und 8 bis 22 C-Atomen mit Di- und Tricarbonsäuren, den Polyolen und gegebenenfalls noch weiteren Hydroxylverbindungen. Sie sind mit beliebigen Säurezahlen herstellbar, z.B. mit den Säurezahlen 15–20, 20–25 oder 25–80.

Weisen die erfindungsgemässen Alkydharze eine Säurezahl >25 und <80 auf sowie eine OH-Zahl <100, so sind sie zu konventionellen Wasserlacken verarbeitbar. Vorzugsweise werden diese Harze nach Neutralisation mit flüchtigen Aminen wie z.B. Ammoniak, Triethylamin oder Dimethylethanolamin unter Verwendung von Hilfslösungsmitteln wie Butylglykol in Wasser gelöst.

Erfindungsgemässe Alkydharze mit OH-Zahl >100 und Säurezahlen zwischen 15 und 30 mg sind nach partieller bzw. vollständiger Neutralisation der noch vorhandenen Carboxylgruppen mit organischen Basen in Wasser ohne Zusatz organischer Lösungsmittel kolloidal löslich bzw. unter Zusatz geringer Emulgatormengen, das heisst etwa 1 bis 5 Gew.-%, bezogen auf Alkydharze, leicht emulgierbar. Vorteilhafterweise werden zur Emulgierung oder auch nur zur Verbesserung der Lagerstabilität Additionsprodukte des Glycids, gewünschtenfalls gemischt mit Ethylenoxid an Alkohole bzw. Esteralkohole oder Alkylphenole oder Fettsäuren, Fettamine oder Fettsäureamide mit 26 bis 12 Kohlenstoffatomen im hydrophoben Molekülteil, wobei aber 2 bis 22 Hydroxylgruppen pro Gesamtmolekül vorliegen sollen, eingesetzt.

Zur Neutralisation aller erfindungsgemässer Alkydharze mit Säurezahl zwischen 15 und 30 eignen sich insbesondere Amine, welche unter Einbrennbedingungen nicht flüchtig sind. Geeignet sind z.B. tertiäre Amine mit 2,3-Dihydroxypropylgruppen am Stickstoff, die in der US-PS 4259219 beschrieben werden. Weiterhin geeignet sind Aminoalkohole mit innenständiger, primärer Aminogruppe wie sie aus der GB-PS 1003326 bekannt sind.

Die Lösungen der erfindungsgemässen Alkydharze können nach herkömmlichen Methoden pigmentiert werden. Als Lackbindemittel zeichnen sich Kombinationen der erfindungsgemässen Alkydharze mit Aminoharzbildnern, wie Hexamethylether des Hexamethylolamins bzw. den entsprechenden Kondensaten durch besonders gute Eigenschaften aus. Handelt es sich um Einbrennharze, so erfolgt das Einbrennen der Lackfilme, die durch Aufbringen der Lösungen nach bekannten Methoden erhalten werden, z.B. nach einer Vortrocknung bei Temperaturen zwischen etwa 120 und 180 °C in geeigneten Trockenöfen bzw. Trockenkanälen.

Die Lacke können zum Überziehen der verschiedensten Materialien, wie Glas oder Metall, z.B. Aluminium, Eisen, Stahl und dergleichen mehr, verwendet werden. Die entsprechend eingebrannten Überzüge zeichnen sich durch hohe Flexibilität, auch bei harter Einstellung, gute Werte für Metallhaftung (auch pigmentiert), Hochglanz und erhöhte Schwitzwasserbeständigkeit aus. Insbesondere Wasserlacke auf Basis erfindungsgemässer Alkydharze mit OH-Zahl >200 und Säurezahl zwischen 5 und 40 mg KOH/g sind, sowohl den herkömmlichen Emulsionen als auch den wasserverdünnbaren aminneutralisierten Systemen hoher Säurezahl deutlich überlegen. Sie erreichen bzw. übertreffen teilweise den Qualitätsstandard der Alkydharze wie sie aus Lösungsmitteln eingesetzt bzw. aufgebracht werden. In diesem Zusammenhang wird besonders auf die Vorteile hingewiesen, die durch den vollständigen Verzicht auf organische Lösungsmittel und den äusserst geringen Anteil flüchtiger Amine gegeben sind.

Beispiele

1. Herstellung von Alkydharzen

Die Kondensation erfolgte in einer heizbaren Veresterungsapparatur, in üblicher Weise unter Stickstoff. Die Komponenten für die erste Stufe wurden gemeinsam bzw. schrittweise unter Zusatz von 4,00 kg Xylol bis zur gewünschten Säurezahl erhitzt.

Beispiel 1

Es wurden kondensiert:

6,16 kg fraktionierte Fettsäuren (Kettenlängenverteilung:

60 Gew.-% Caprylsäure

35 Gew.-% Caprinsäure

3 Gew.-% Laurinsäure

2 Gew.-% höhere Fettsäuren)

2,28 kg Glycerin

6,16 kg des Umsetzungsproduktes eines epoxidierten Sojaöls mit Ethylenglykol Verhältnis: 2 mol Ethylenglykol pro mol Epoxidgruppen. Überschüssiges Diol durch Destillation entfernt. OH-Zahl 354

11,08 kg Neopentylglykol

9,88 kg Phthalsäureanhydrid

7,68 kg Trimellitsäureanhydrid

Reaktionszeit: 4 h

Reaktionstemperatur: Maximal 190 °C

Säurezahl: 71,8 (Produkt 1)

Es wurden 2,25 Wasser abgeschieden und das Xylol durch Destillation im Vakuum entfernt.

In einem zweiten Reaktionsschritt wurden zur Reaktion gebracht:

40,99 kg Alkydharz (Produkt 1, Säurezahl 71,8)

2,64 kg Glycid

1,20 kg einer 50%igen wässrigen Glycerylaminlösung (Addukt aus 1 mol 2-Amino-2-methyl-propanol und 2 Mol Glycid)

Reaktionszeit: 90 min

Reaktionstemperatur: Maximal 140 °C, Endsäurezahl: 25

Die erfindungsgemässen Alkydharze wurden in der Wärme mit 4,90 kg einer 50%igen wässrigen Lösung des Adduktes von 7,5 mol Glycid an 1 mol Nonylphenol als Hilfsemulgator und 9,20 kg einer 50%igen wässrigen Lösung des Adduktes von 2 mol Glycid an 1 mol 1-Amino-2-methyl-propanol vermischt. Anschliessend wurden 2,06 kg Wasser zugegeben, so dass eine Alkydharzmikroemulsion mit 85% Feststoff entstand.

Beispiel 2

Es wurde wie in Beispiel 1 verfahren, jedoch wurde statt des Umsetzungsproduktes von epoxidiertem Sojaöl mit Ethylenglykol das folgende Polyol verwendet:

6,16 kg Umsetzungsprodukt des Epoxids eines $C_{18}$-Fettalkohols mit der Iodzahl 92–96 mit Ethylenglykol im Molverhältnis 1:1, OH-Zahl 346

Endsäurezahl: 26,0

Beispiel 3

Es wurde wie in den Beispielen 1 und 2 verfahren, jedoch wurde das folgende Polyol verwendet:

6,16 kg Umesterungs- und Ringöffnungsprodukt eines Epoxistearinsäuremethylesters (aus Ölsäuremethylester, IZ 55 durch vollständige Epoxidation hergestellt) mit Ethylenglykol im Molverhältnis 1:2; Überschüsse werden abdestilliert.

Endsäurezahl: 24,5

Beispiel 4

Es wurde wie in den Beispielen 1–3 verfahren, jedoch wurde das folgende Polyol verwendet:

6,16 kg Umesterungs- und Ringöffnungsprodukt eines Epoxistearinsäuremethylesters (aus Ölsäuremethylester, IZ 80 durch vollständige Epoxidation hergestellt) mit Trimethylolpropan im Molverhältnis 1:2. Überschüsse wurden abdestilliert (Dünnschichtverdampfer).

Endsäurezahl: 25,5

Vergleichsbeispiel

Zu Vergleichszwecken wurde das Folgende als Basis für wasserverdünnbare Alkydharze geeignete Kondensat hergestellt: Beispiel 1 wurde wiederholt, jedoch wurde das Umsetzungsprodukt des epoxidierten Sojatriglycerids durch 2,11 kg Trimethylolpropan ersetzt.

Endsäurezahl: 25,0

2. Herstellung eines Weisslackes

Im Dissolver wurde eine Malpaste hergestellt aus (Gew.-Teile):

50 Teile Alkydharz, 85%ig in Wasser

32 Teile deionisiertes Wasser

30 Teile Pigmentationshilfsmittel (9 Teile einer 30%igen Säuregruppen tragenden, niedermolekularen Acrylatdispersion – Primal I94, Rohm & Haas Co – und 1 Teil 2-Methyl-2-aminopropanol-2-Glycid, 75 Gew.-%ig in Wasser)

183 Teile Titandioxid (Chronos Titan CL 310) Aufgelackt wurde mit

309 Teilen Alkydharz, 85%ig in Wasser

131 Teilen Melaminharz (Cymel 301 American Cyanamid Co)

265 Teilen deionisiertem Wasser

Es wurden 1000 Teile Weisslack mit einem Alkydharz zu Melaminharz Verhältnis 7:3 und einer Pigmentvolumenkonzentration von ca. 11% erhalten.

3. Prüfung der Überzüge

Zur Prüfung der Filme wurden die Lacke auf Stahlbleche gespritzt und 15 min bei 160 °C eingebrannt. Die Trockenfilmdicken betrugen 25–40 µm. Die erhaltenen Ergebnisse sind in den Tabellen aufgelistet.

Tabelle 1

| Beispiel-Nr. | Pendelhärte (nach König) (sec) | Tiefung mm | % Glanz 20° | Glanz <20° nach 600 h Weather-O-meter |
|---|---|---|---|---|
| 1 | 153 | 6,8 | 98 | 70 |
| 2 | 161 | 5,8 | 85 | 62 |
| 3 | 124 | 6,6 | 78 | 55 |
| 4 | 148 | 6,9 | 77 | 60 |
| Vergl. | 196 | 2,7 | 85 | 52 |

Tabelle 2
Ergebnisse des Schwitzkastentests bei 40 °C
Blasenbeurteilung nach DIN 53209

| Nr./h | 24 | 48 | 120 | 168 | 216 | 288 |
|---|---|---|---|---|---|---|
| 1 | 0 | 0 | 0 | 0 | m1/g1 | m4/g1 |
| 2 | 0 | 0 | 0 | 0 | 0 | m1/g1 |
| 3 | 0 | 0 | 0 | 0 | 0 | m1/g1 |
| 4 | 0 | 0 | 0 | 0 | m1/g1 | m1/g1 |
| Vergleich | 0 | m2/g1 | m4/g2 | m5/g3 | m5/g3 | – |

## Patentansprüche für die Vertragsstaaten: CH, LI, DE, GB

1. Alkydharze, hergestellt aus mehrwertigen Carbonsäuren bzw. ihren reaktiven Derivaten und mehrwertigen Alkoholen, gewünschtenfalls unter Mitverwendung einwertiger Modifizierungsmittel, wobei als mehrwertige Alkohole wenigstens anteilsweise Umsetzungsprodukte von epoxidierten Fettsäureestern und/oder -amiden und/oder epoxidierten Fettalkoholen mit Alkoholen und/oder Phenolen enthalten sind, welche gewünschtenfalls zumindest anteilsweise mit Alkenoxiden mit bis zu 4 Kohlenstoffatomen zur Reaktion gebracht worden sind, dadurch gekennzeichnet, dass die Alkydharze eine Säurezahl zwischen 15 und 30 sowie eine OH-Zahl grösser 100 oder eine Säurezahl zwischen 25 und 80 und eine OH-Zahl kleiner 100 aufweisen.

2. Alkydharze nach Anspruch 1, dadurch gekennzeichnet, dass die Umsetzungsprodukte in einer Menge von 5 bis 60 Gew.-%, bezogen auf Alkydharze, vorzugsweise von 5 bis 25 Gew.-%, enthalten sind.

3. Alkydharze nach den Ansprüchen 1 und 2, dadurch gekennzeichnet, dass sie Umsetzungsprodukte von Hydroxylverbindungen mit epoxidierten Triglyceriden, epoxidiertem Oleylalkohol mit Iodzahl zwischen 50 und 170, und/oder epoxidiertem Eruccaalkohol enthalten.

4. Alkydharze nach den Ansprüchen 1 bis 3, dadurch gekennzeichnet, dass sie Umsetzungsprodukte von epoxidierten Fettsäurederivaten oder Fettalkoholen enthalten, welche durch sauer oder basisch katalysierte Ringöffnung der Epoxide mit mindestens einer der folgenden Hydroxylverbindungen hergestellt worden sind:
a) primäre monofunktionelle geradkettige oder verzweigte aliphatische Alkohole mit vorzugsweise bis zu 8 C-Atomen,
b) Glykole mit bis zu 6 C-Atomen wie Ethylenglykol, Propylenglykol, Butandiol, Neopentylglykol, Hexandiol,
c) höherfunktionelle Alkohole wie Glycerin, Trimethylolpropan, Pentaerythrit,
d) mehrwertige und/oder mehrkernige Phenole wie Hydrochinon, Resorcin oder Bis-phenol-A,
e) Umsetzungsprodukte der Hydroxyverbindungen a)–e) mit Ethylenoxid, Propylenoxid oder Glycid.

5. Alkydharze nach den Ansprüchen 1 bis 4, dadurch gekennzeichnet, dass die Umsetzungsprodukte von Fettsäurederivaten oder Fettalkoholen mit Hydroxylverbindungen enthalten, welche mit bis zu 30 mol Ethylenoxid, Propylenoxid oder Glycid pro mol Umsetzungsprodukt zur Reaktion gebracht worden sind.

6. Alkydharze nach den Ansprüchen 1 bis 5, dadurch gekennzeichnet, dass sie mit bis zu 40 Gew.-% Fettsäuren, bezogen auf Alkydharz, modifiziert sind.

7. Alkydharze nach den Ansprüchen 1 bis 6, dadurch gekennzeichnet, dass sie neben oder anstelle der Fettsäuremodifizierung Alkenoxide mit 8 bis 20 C-Atomen sowie innenständiger und/oder endständiger Epoxidgruppe enthalten.

8. Alkydharze nach den Ansprüchen 1 bis 7, dadurch gekennzeichnet, dass sie eine Säurezahl zwischen 15 und 30, insbesondere zwischen 20 und 25 sowie eine OH-Zahl grösser 200 mg KOH/g aufweisen.

9. Alkydharze nach Anspruch 8, dadurch gekennzeichnet, dass sie nach einem Verfahren hergestellt worden sind, bei dem zunächst bis zu einer Säurezahl zwischen 40 und 180 kondensiert und anschliessend mit Glycid zur gewünschten Säurezahl umgesetzt worden ist.

10. Verwendung der Alkydharze nach den Ansprüchen 1 bis 9 als Bindemittel in ofentrocknenden Lacken, insbesondere in ofentrocknenden Wasserlacken.

## Patentansprüche für den Vertragsstaat: AT

1. Verfahren zur Herstellung von Alkydharzen aus mehrwertigen Carbonsäuren bzw. ihren reaktiven Derivaten und mehrwertigen Alkoholen, gewünschtenfalls unter Mitverwendung einwertiger Modifizierungsmittel, bei dem man als mehrwertige Alkohole wenigstens anteilsweise Umsetzungsprodukte von epoxidierten Fettsäureestern und/oder -amiden und/oder epoxidierten Fettalkoholen mit Alkoholen und/oder Phenolen einsetzt, welche gewünschtenfalls zumindest anteilsweise mit Alkenoxiden mit bis zu 4 Kohlenstoffatomen zur Reaktion gebracht worden sind, dadurch gekennzeichnet, dass die Alkydharze eine Säurezahl zwischen 15 und 30 sowie eine OH-Zahl grösser 100 oder eine Säurezahl zwischen 25 und 80 und eine OH-Zahl kleiner 100 kondensieren.

2. Verfahren nach Anspruch 1, dadurch gekennzeichnet, dass man die Umsetzungsprodukte in einer Menge von 5 bis 60 Gew.-%, bezogen auf Alkydharz, vorzugsweise von 5 bis 25 Gew.-%, einsetzt.

3. Verfahren nach den Ansprüchen 1 und 2, dadurch gekennzeichnet, dass man die Umsetzungsprodukte von Hydroxylverbindungen mit epoxidierten Triglyceriden, epoxidiertem Oleylalkohol mit Iodzahl zwischen 50 und 170, und/oder epoxidiertem Erucaalkohol einsetzt.

4. Verfahren nach den Ansprüchen 1 bis 3, dadurch gekennzeichnet, dass man Umsetzungsprodukte von epoxidierten Fettsäurederivaten oder Fettalkoholen einsetzt, welche durch sauer oder basisch katalysierte Ringöffnung der Epoxide mit mindestens einer der folgenden Hydroxylverbindungen hergestellt worden sind:

a) primäre monofunktionelle geradkettige oder verzweigte aliphatische Alkohole mit vorzugsweise bis zu 8 C-Atomen,

b) Glykole mit bis zu 6 C-Atomen wie Ethylenglykol, Propylenglykol, Butandiol, Neopentylglykol, Hexandiol,

c) höherfunktionelle Alkohole wie Glycerin, Trimethylolpropan, Pentaerythrit,

d) mehrwertige und/oder mehrkernige Phenole wie Hydrochinon, Resorcin oder Bis-phenol-A,

e) Umsetzungsprodukte der Hydroxylverbindungen a)–e) mit Ethylenoxid, Propylenoxid oder Glycid.

5. Verfahren nach den Ansprüchen 1 bis 4, dadurch gekennzeichnet, dass man Umsetzungsprodukte von Fettsäurederivaten oder Fettalkoholen mit Hydroxylverbindungen einsetzt, welche mit bis zu 30 mol Ethylenoxid, Propylenoxid oder Glycid pro mol Umsetzungsprodukt zur Reaktion gebracht worden sind.

6. Verfahren nach den Ansprüchen 1 bis 5, dadurch gekennzeichnet, dass man die Alkydharze mit bis zu 40 Gew.-% Fettsäuren, bezogen auf Alkydharz, modifiziert.

7. Verfahren nach den Ansprüchen 1 bis 6, dadurch gekennzeichnet, dass man neben oder anstelle der Fettsäuremodifizierung Alkenoxide mit 8 bis 20 C-Atomen sowie innenständiger und/oder endständiger Epoxidgruppen einsetzt.

8. Verfahren nach den Ansprüchen 1 bis 7, dadurch gekennzeichnet, dass man eine Säurezahl zwischen 15 und 30, insbesondere zwischen 20 und 25 sowie eine OH-Zahl grösser 200 mg KOH/g einstellt.

9. Verfahren nach Anspruch 8, dadurch gekennzeichnet, dass man die Harze zunächst bis zu einer Säurezahl zwischen 40 und 180 kondensiert und anschliessend mit Glycid zur gewünschten Säurezahl umsetzt.

10. Verwendung der nach den Ansprüchen 1 bis 9 hergestellten Alkydharze als Bindemittel in ofentrocknenden Lacken, insbesondere in ofentrocknenden Wasserlacken.

**Claims for the Contracting states: CH, LI, DE, GB**

1. Alkyd resins prepared from polybasic carboxylic acids or reactive derivatives thereof and polyhydric alcohols, if desired using monofunctional modifying agents, in which reaction products of epoxidized fatty acid esters and/or amides and/or epoxidized fatty alcohols with alcohols and/or phenols, which if desired have been reacted at least proportionately with alkene oxides containing up to 4 carbon atoms, are used at least proportionately as the polyhydric alcohols, characterized in that the alkyd resins have an acid number of from 15 to 30 and an OH number above 100 or an acid number of from 25 to 80 and an OH number below 100.

2. Alkyd resins as claimed in claim 1, characterized in that the reaction products are present in a quantity of from 5 to 60% by weight, based on alkyd resin, and preferably in a quantity of from 5 to 25% by weight.

3. Alkyd resins as claimed in claims 1 and 2, characterized in that they contain reaction products of hydroxyl compounds with epoxidized triglycerides, epoxidized oleyl alcohol having an iodine number of from 50 to 170 and/or epoxidized erucic alcohol.

4. Alkyd resins as claimed in claims 1 to 3, characterized in that they contain reaction products of epoxidized fatty acid derivatives or fatty alcohols which have been produced by acid- or base-catalyzed ring opening of the epoxides with at least one of the following hydroxyl compounds:

a) primary, monofunctional, straight-chain or branched aliphatic alcohols preferably containing up to 8 carbon atoms,

b) glycols containing up to 6 carbon atoms, such as ethylene glycol, propylene glycol, butane diol, neopentyl glycol, hexane diol,

c) alcohols of relatively high functionality, such as glycerol, trimethylol propane, pentaerythritol,

d) polyhydric and/or polynuclear phenols, such as hydroquinone, resorcinol or bisphenol A,

e) reaction products of the hydroxy compounds a) to e) with ethylene oxide, propylene oxide or glycidol.

5. Alkyd resins as claimed in claims 1 to 4, characterized in that they contain reaction products of fatty acid derivatives or fatty alcohols with hydroxyl compounds which have been reacted with up to 30 moles ethylene oxide, propylene oxide or glycidol per mole reaction product.

6. Alkyd resins as claimed in claims 1 to 5, characterized in that they are modified with up to 40% by weight fatty acids, based on alkyd resin.

7. Alkyd resins as claimed in claims 1 to 6, characterized in that, in addition to or instead of the fatty acid modification, they contain alkene oxides containing from 8 to 20 carbon atoms and an internal and/or terminal epoxide group.

8. Alkyd resins as claimed in claims 1 to 7, characterized in that they have an acid number of from 15 to 30 and more especially of from 20 to 25 and an OH number of greater than 200 mg KOH/g.

9. Alkyd resins as claimed in claim 8, characterized in that they have been produced by a process in which they are first condensed to an acid number of from 40 to 180 and then reacted with glycidol to the desired acid number.

10. The use of the alkyd resins claimed in claims 1 to 9 as binders in oven-drying lacquers, particularly in ovendrying aqueous lacquers.

**Claims for the Contracting state: AT**

1. A process for the production of alkyd resins from polybasic carboxylic acids or reactive derivatives thereof and polyhydric alcohols, if desired using monofunctional modifying agents, in which reaction products of epoxidized fatty acid esters and/or amides and/or epoxidized fatty alcohols with alcohols and/or phenols which, if desired, have been at least proportionately reacted with alkene oxides containing up to 4 carbon atoms are used at least proportionately as the polyhydric alcohols, characterized in that the alkyd resins are condensed to an acid number of from 15 to 30 and an OH number above 100 or to an acid number of from 25 to 80 and an OH number below 100.

2. A process as claimed in claim 1, characterized in that the reaction products are used in a quantity of from 5 to 60% by weight, based on alkyd resin, and preferably in a quantity of from 5 to 25% by weight.

3. A process as claimed in claims 1 and 2, characterized in that the reaction products of hydroxyl compounds with epoxidized triglycerides, epoxidized oleyl alcohol having an iodine number of from 50 to 170 and/or epoxidized erucic alcohol are used.

4. A process as claimed in claims 1 to 3, characterized in that reaction products of epoxidized fatty acid derivatives or fatty alcohols which have been produced by acid- or base-catalyzed ring opening of the epoxides with at least one of the following hydroxyl compounds are used:

a) primary, monofunctional, straight-chain or branched aliphatic alcohols preferably containing up to 8 carbon atoms,

b) glycols containing up to 6 carbon atoms, such as ethylene glycol, propylene glycol, butane diol, neopentyl glycol, hexane diol,

c) alcohols of relatively high functionality, such as glycerol, trimethylol propane, pentaerythritol,

d) polyhydric and/or polynuclear phenols, such as hydroquinone, resorcinol or bisphenol A,

e) reaction products of the hydroxyl compounds a) to e) with ethylene oxide, propylene oxide or glycidol.

5. A process as claimed in claims 1 to 4, characterized in that reaction products of fatty acid derivatives or fatty alcohols with hydroxyl compounds which have been reacted with up to 30 moles ethylene oxide, propylene oxide or glycidol per mole reaction product are used.

6. A process as claimed in claims 1 to 5, characterized in that the alkyd resins are modified with up to 40% by weight fatty acids, based on alkyd resin.

7. A process as claimed in claims 1 to 6, characterized in that alkene oxides containing from 8 to 20 carbon atoms and an internal and/or terminal epoxide group are used in addition to or instead of the fatty acid modification.

8. A process as claimed in claims 1 to 7, characterized in that an acid number of from 15 to 30 and more especially from 20 to 25 and an OH number of greater than 200 mg KOH/g is adjusted.

9. A process as claimed in claim 8, characterized in that the resins are first condensed to an acid number of from 40 to 180 and then reacted with glycidol to the desired acid number.

10. The use of the alkyd resins produced in accordance with claims 1 to 9 as binders in oven-drying lacquers, more especially in oven-drying aqueous lacquers.

**Revendications pour les Etats contractants: CH, LI, DE, GB**

1. Résines alkydes, préparées à partir d'acides carboxyliques polyvalents ou de leurs dérivés réactifs et à partir d'alcools polyvalents, éventuellement avec utilisation conjointe d'agents de modification monovalents, étant contenus en tant qu'alcools polyvalents tout au moins en partie des produits de réaction d'esters et/ou d'amides d'acides gras époxydés et/ou d'alcools gras époxydés avec des alcools et/ou phénols qui, éventuellement, sont mis à réagir tout au moins en partie avec des oxydes d'alcoylène ayant jusqu'à 4 atomes de carbone, caractérisées en ce que les résines alkydes présentent un indice d'acide entre 15 et 30 de même qu'un indice OH supérieur à 100, ou un indice d'acide entre 25 et 80 et un indice OH inférieur à 100.

2. Résines alkydes selon la revendication 1, caractérisées en ce qu'elles contiennent les produits de réaction en une quantité de 5 à 60% en poids par rapport à la résine alkyde, de préférence de 5 à 25% en poids.

3. Résines alkydes selon les revendications 1 et 2, caractérisées en ce qu'elles contiennent des produits de réaction de composés hydroxylés avec des triglycérides époxydés, de l'alcool oléylique époxydé ayant un indice d'iode entre 50 et 170, et/ou d'alcool érucylique époxydé.

4. Résines alkydes selon les revendications 1 à 3, caractérisées en ce qu'elles contiennent des produits de réaction de dérivés, époxydés d'acides gras ou d'alcools gras qui ont été préparés par ouverture par catalyse acide ou basique du cycle des époxydes avec au moins un des composés hydroxylés suivants:

a) des alcools aliphatiques primaires monofonctionnels à chaîne droite ou ramifiée ayant de préférence jusqu'à 8 atomes de carbone,

b) des glycols ayant jusqu'à 6 atomes de carbone comme éthylène glycol, propylène glycol, butane diol, néopentyl glycol, hexane diol,

c) des alcools à fonctionnalité supérieure comme glycérine, triméthylolpropane, pentaérythritol,

d) des phénols polyvalents et/ou polynucléaires comme hydroquinone, résorcine ou bisphénol-A,

e) produits de réaction des composés hydroxylés a)–e) avec de l'oxyde d'éthylène, de l'oxyde de propylène ou du glycidol.

5. Résines alkydes selon les revendications 1 à 4, caractérisées en ce qu'elles contiennent des produits de réaction de dérivés d'acides gras ou d'alcools gras avec des composés hydroxylés qui ont été mis à réagir avec jusqu'à 30 moles d'oxyde d'éthylène, d'oxyde de propylène ou de glycidol par mole du produit de réaction.

6. Résines alkydes selon les revendications 1 à 5, caractérisées en ce qu'elles sont modifiées avec jusqu'à 40% en poids d'acides gras par rapport à la résine alkyde.

7. Résines alkydes selon les revendications 1 à 6, caractérisées en ce qu'à côté ou au lieu de la modification par des acides gras, elles contiennent des oxydes d'alcoylène ayant 8 à 20 atomes de carbone de même que des groupes époxyde en position interne et/ou en position terminale.

8. Résines alkydes selon les revendications 1 à 7, caractérisées en ce qu'elles présentent un indice d'acide entre 15 et 30, en particulier entre 20 et 25, de même qu'un indice OH supérieur à 200 mg de KOH/g.

9. Résines alkydes selon la revendication 8, caractérisées en ce qu'elles ont été préparées par un procédé dans lequel on condense tout d'abord jusqu'à un indice d'acide entre 40 et 180 et l'on fait ensuite réagir avec du glycidol jusqu'à obtention de l'indice d'acide désiré.

10. Utilisation des résines alkydes selon les revendications 1 à 9 comme liants dans des vernis cuits au four, en particulier des vernis à l'eau cuits au four.

### Revendications pour l'Etats contractant: AT

1. Procédé de fabrication de résines alkydes à partir d'acides carboxyliques polyvalents ou de leurs dérivés réactifs et d'alcools polyvalents, si on le désire avec utilisation conjointe d'agents de modification monovalents, dans lequel on utilise comme alcools polyvalents tout au moins en partie des produits de réaction d'esters et/ou amides d'acides gras époxydés et/ou d'alcools gras époxydés avec des alcools et/ou phénols qui, si on le désire, sont mis à réagir tout au moins en partie avec des oxydes d'alcoylène ayant jusqu'à 4 atomes de carbone, caractérisé en ce qu'on condense les résines alkydes jusqu'à un indice d'acide entre 15 et 30 de même qu'à un indice OH supérieur à 100, ou bien jusqu'à un indice d'acide entre 25 et 80 et à un indice OH inférieur à 100.

2. Procédé selon la revendication 1, caractérisé en ce qu'on utilise les produits de réaction en une quantité de 5 à 60% en poids par rapport à la résine alkyde, de préférence de 5 à 25% en poids.

3. Procédé selon les revendications 1 et 2, caractérisé en ce qu'on utilise les produits de réaction de composés hydroxylés avec des triglycérides époxydés, de l'alcool oléylique époxydé ayant un indice d'iode entre 50 et 170, et/ou d'alcool érucylique époxydé.

4. Procédé selon les revendications 1 à 3, caractérisé en ce qu'on utilise des produits de réaction de dérivés, époxydés d'acides gras ou d'alcools gras qui ont été préparés par ouverture catalysée par les acides ou les bases du cycle des époxydes avec au moins un des composés hydroxylés suivants:

a) des alcools aliphatiques primaires monofonctionnels à chaîne droite ou ramifiée ayant de préférence jusqu'à 8 atomes de carbone,

b) des glycols ayant jusqu'à 6 atomes de carbone comme éthylène glycol, propylène glycol, butane diol, néopentyl glycol, hexane diol,

c) des alcools à fonctionnalité plus élevée comme glycérine, triméthylolpropane, pentaérythritol,

d) des phénols polyvalents et/ou polynucléaires comme hydroquinone, résorcine ou bisphénol-A,

e) des produits de réaction des composés hydroxylés a)–e) avec de l'oxyde d'éthylène, de l'oxyde de propylène ou du glycidol.

5. Procédé selon les revendications 1 à 4, caractérisé en ce qu'on utilise des produits de réaction de dérivés d'acides gras ou d'alcools gras avec des composés hydroxylés qui ont été mis à réagir avec jusqu'à 30 moles d'oxyde d'éthylène, d'oxyde de propylène ou de glycidol par mole de produit de réaction.

6. Procédé selon les revendications 1 à 5, caractérisé en ce qu'on modifie les résines alkydes avec jusqu'à 40% en poids d'acides gras par rapport à la résine alkyde.

7. Procédé selon les revendications 1 à 6, caractérisé en ce qu'on utilise à côté ou au lieu de la modification par des acides gras des oxydes d'alcoylène ayant 8 à 20 atomes de carbone de même que des groupes époxyde en position interne et/ou terminale.

8. Procédé selon les revendications 1 à 7, caractérisé en ce qu'on règle un indice d'acide entre 15 et 30, en particulier entre 20 et 25, de même qu'un indice OH supérieur à 200 mg de KOH/g.

9. Procédé selon la revendication 8, caractérisé en ce qu'on condense d'abord les résines jusqu'à un indice d'acide entre 40 et 180, puis on les fait réagir avec du glycidol jusqu'à obtention de l'indice d'acide désiré.

10. Utilisation des résines alkydes préparées selon les revendications 1 à 9 comme liants dans des vernis à cuire au four, en particulier dans des vernis à l'eau à cuire au four.